# EUROPEAN PATENT APPLICATION

(11) **EP 0 940 307 A2**
(43) Date of publication of application: **08.09.1999**
(21) Application number: 99102869.7
(22) Date of filing: 03.03.1999
(51) Int. Cl.: B60R 22/46, B60R 21/32

(54) **Seatbelt device, pre-tensioner, and vehicle**

(30) Priority: 04.03.1998 JP 5215798
(71) Applicant: TAKATA CORPORATION, Minato-ku, Tokyo (JP)
(72) Inventor: Aoki, Hiroshi, c/o Takata Corporation, Minato-ku, Tokyo (JP); Kato, Kazuyoshi, c/o Takata Corporation, Minato-ku, Tokyo (JP)
(74) Representative: Weisert, Annekäte, Dipl.-Ing. Dr.-Ing.

(57) **Abstract**

The tensile strength on a seat belt by a pre-tensioner and the length of the seat belt to be wound by the pre-tensioner are adjustable according to the weight of an occupant. Once at least one of gas generators (A) and (B) is actuated, gas pressure is applied to one side of a steel tape (26) through passages (29a,29b) so that the tape (26) is pressed in the counter clockwise direction. A ring (25) therefore rotates, so a driven shaft (24) and a reel rotate in the winding direction of the seat belt (35) through a clutch mechanism. The tensile strength and the length of the seat belt to be wound are adjusted by selecting to actuate one or both of the gas generators (A) and (B).

## Description

### BACKGROUND OF THE INVENTION

The present invention relates to a seatbelt device installed in a vehicle for protecting an occupant. More particularly, the present invention relates to a seat belt device having a pre-tensioner which is designed to be in soft contact with an occupant when the occupant normally wears the seat belt and to retract the seat belt when a vehicle comes in an emergency. The present invention also relates to a vehicle provided with the seatbelt device and a pre-tensioner for a seatbelt device.

### DESCRIPTION OF PRIOR ART

In a seatbelt retractor with a pre-tensioner, a predetermined amount of seat belt is wound by the pre-tensioner at a time when a vehicle collision is detected, in order to tightly restrain an occupant.

The pre-tensioner drives a driven shaft projected from a reel of the seatbelt retractor by a drive unit, thereby rotating the reel in a belt-winding direction.

The pre-tensioner is required not to prevent the free rotation of the reel when the vehicle is in the normal state. Disposed between the driven shaft and the pre-tensioner drive unit is a clutch mechanism for transmitting the driving force from the drive unit to the driven shaft only when a vehicle collision is detected.

As such a drive unit, there are units each of which ignites powder by detection of the vehicle collision and produces torque according to gas pressure developed by the ignition (for example, US patent No.5,451,008, German patent DE 4444775A, and Japanese utility model 7-5992A).

There is also a known drive unit of which power source is a spiral spring (Japanese patent 59-168860A).

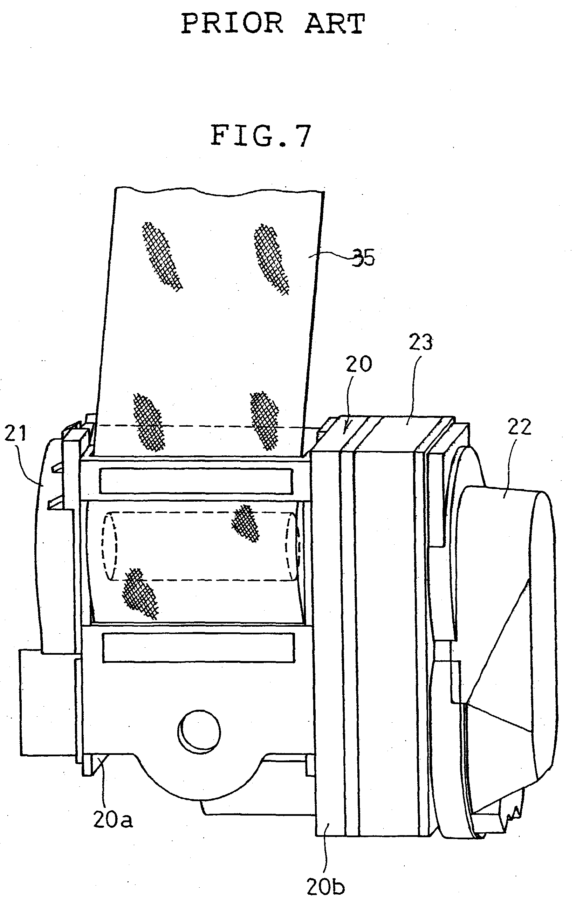

Figs. 7 through 9 show one conventional example of the aforementioned pre-tensioners of which the power source is powder (DE 4444775A).

A retractor 20 has a frame including a side wall 20a and a side wall 20b. An emergency locking mechanism 21 is disposed on the outside of the side wall 20a and a return spring unit 22 and a pre-tensioner 23 are disposed on the outside of the side wall 20b.

The pre-tensioner 23 comprises a driven shaft 24 integrally projected from a reel, a rotational ring 25 disposed coaxially with the driven shaft 24, an accommodating chamber 27 of a steel tape 26 arranged around the rotational ring 25 and a gas generator 28 for supplying gas into the accommodating chamber 27.

Both ends of the tape 26 are fixed to a housing 29 and a middle portion thereof is wound onto the ring 25.

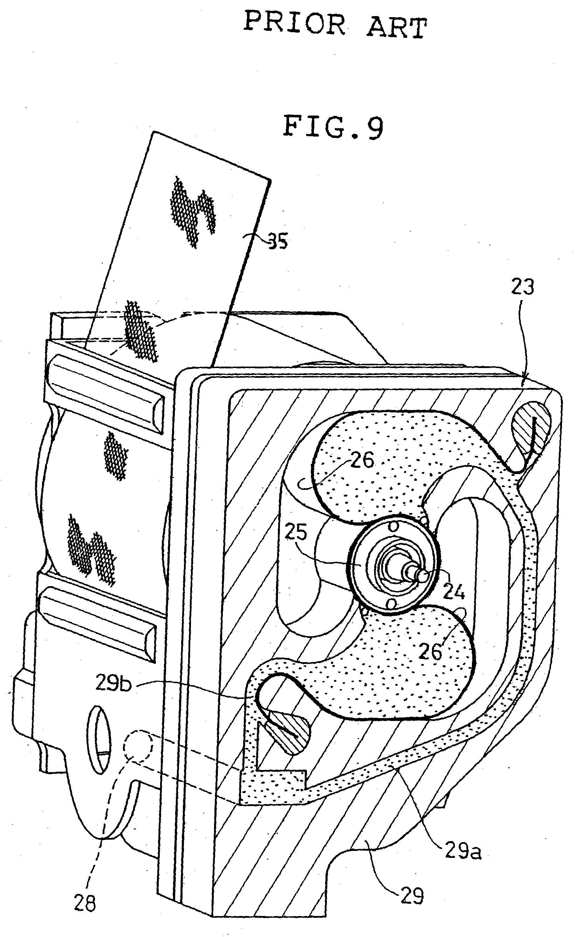

As the gas generator 28 is activated to ignite, gas pressure is developed only onto one sides of the steel tape 26 through passages 29, 29a, 29b so that the tape 26 is pressed in the counter clockwise direction as shown in Fig. 9. The ring 25 therefore rotates, so the driven shaft 24 and the reel rotate in the winding direction of the seat belt 35 through the clutch mechanism (not shown).

There is no conventional seatbelt device which is designed to control the tensile strength on the seat belt or the length of the seat belt to be wound when the pre-tensioner is actuated.

### OBJECT AND SUMMARY OF THE INVENTION

It is an object of the present invention to provide a seatbelt device for protecting an occupant sitting in a vehicle seat which can adjust the tensile strength on the seat belt by the pre-tensioner or the length of the seat belt to be wound by the pre-tensioner.

It is also an object of the present invention to provide a vehicle in which this seatbelt device is installed and to provide a pre-tensioner used in this seatbelt device.

A seatbelt device of the present invention comprises a seat belt, a retractor for retracting the seat belt, and a pre-tensioner for winding a predetermined length of the seat belt in an emergency. At least one of the tensile strength by the pre-tensioner and the length of the seat belt to be wound by the pre-tensioner are adjustable.

When the pre-tensioner employs a gas generating means as a power source, the gas generating means may be capable of adjusting the volume of gas to be generated whereby at least one of the tensile strength and the length of the seat belt to be wound are adjustable. In this case, the gas generating means may comprise a plurality of gas generators so that the volume of gas to be generated is adjustable by changing the number of gas generators to be actuated or shifting the timing for actuation of the respective gas generators. In this case also, the gas generators may have such capacities that different volume of gas is generated, thereby adjusting the volume of gas to be generated in the multi-stages.

The volume of gas to be generated may be adjusted according to weight, detected by a weight sensor, of an occupant sitting in a vehicle seat. As the tensile strength on the seat belt by the pre-tensioner and the length of the seat belt to be wound by the pretensioner are set to be larger an upper body of the occupant is restrained more tightly to the seat back in the event of a vehicle collision.

When the vehicle comes into collision, the upper body of the occupant tends to be thrown forward. The seat belt worn by the occupant permit the upper body of the occupant to move forward only in a limited distance. In case the seatbelt device is provided with an impact absorbing mechanism, the seat belt is unwound in a short length while keeping a predetermined tensile force so that the impact on the occupant is absorbed.

In case the occupant has heavy weight, the inertia force of the occupant moving forward is larger than that of a light occupant even with the equal collision speed of the vehicle. Therefore, in case of the heavy occupant, the tensile force on the seat belt by the pre-tensioner and the length of the seat belt to be wound by the pre-tensioner are set larger than those in case of the light occupant, whereby the forward movement of the upper body of the heavy occupant is limited suitably.

When the weight detected by the weight sensor is 0 or less than a predetermined value, the pre-tensioner may not be actuated.

When a precise weight value of the occupant is detected by the weight sensor, the volume of gas to be generated for an airbag device may be controlled according to the weight value.

In the present invention, the tensile strength on the seat belt and the length of the seat belt to be wound by the pre-tensioner may be adjusted according to the crash-severity in the event of a vehicle collision.

### BRIEF DESCRIPTION OF THE DRAWINGS

Fig. 1 is a perspective view of a seatbelt device according to an embodiment;
Fig. 2 is a perspective view of a portion including a gas generator of the seatbelt device shown in Fig. 1;
Fig. 3 is a sectional view taken along a line III-III of Fig. 2;
Fig. 4 is a side view of a cabin of a vehicle in which the seatbelt device is installed;
Fig. 5 is a block diagram of a seatbelt system according to the embodiment;
Fig. 6 is a block diagram of a seatbelt system according to an embodiment;
Fig. 7 is a perspective view of a conventional seatbelt retractor with a pre-tensioner;
Fig. 8 is a structural view of the inside of the retractor shown in Fig. 7; and
Fig. 9 is a structural view of the inside of the retractor shown in Figs. 7, 8 when the pre-tensioner is actuated.

### DETAILED DESCRIPTION OF PREFERRED EMBODIMENTS

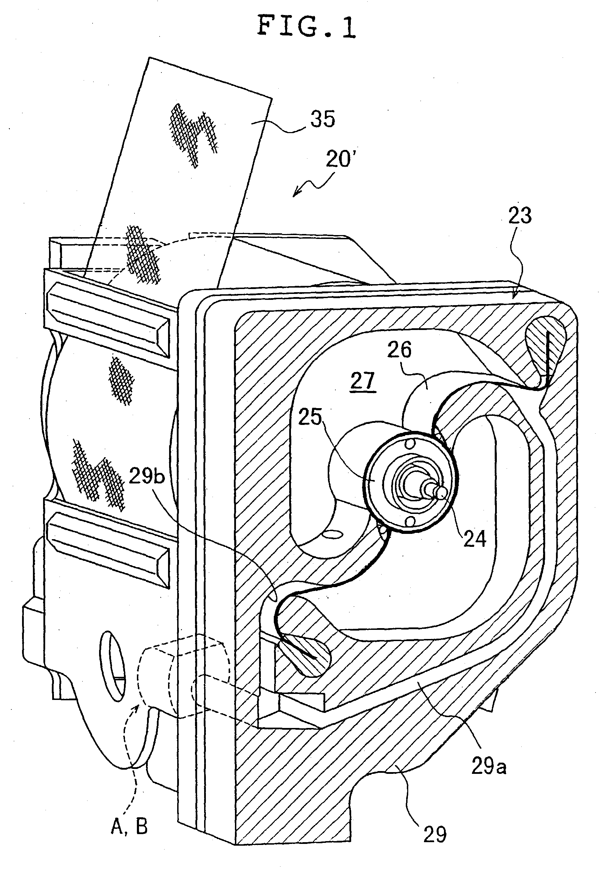

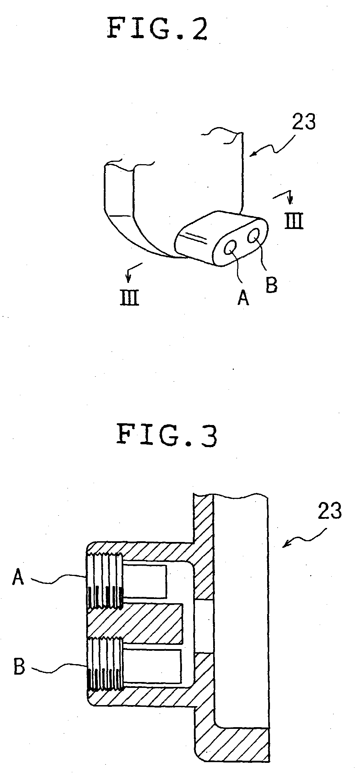

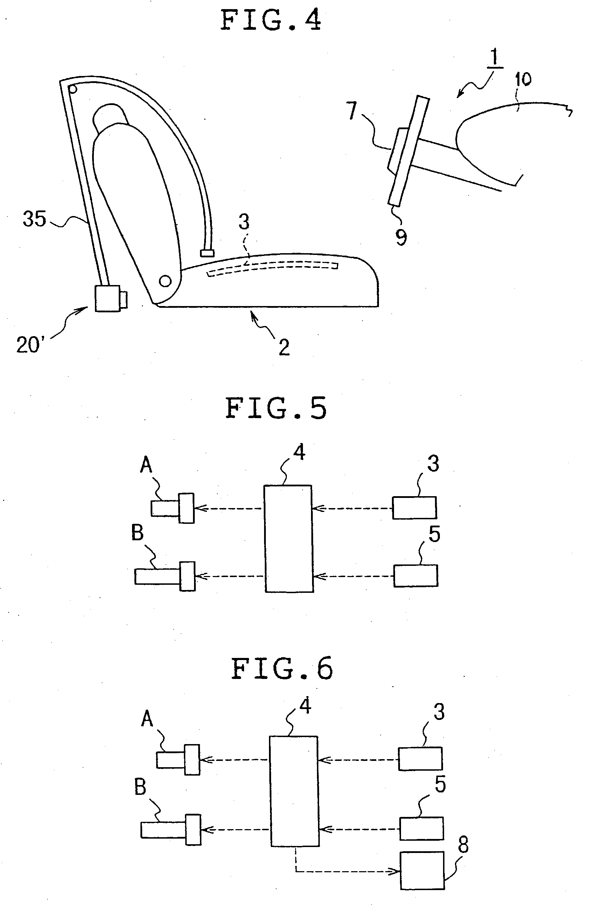

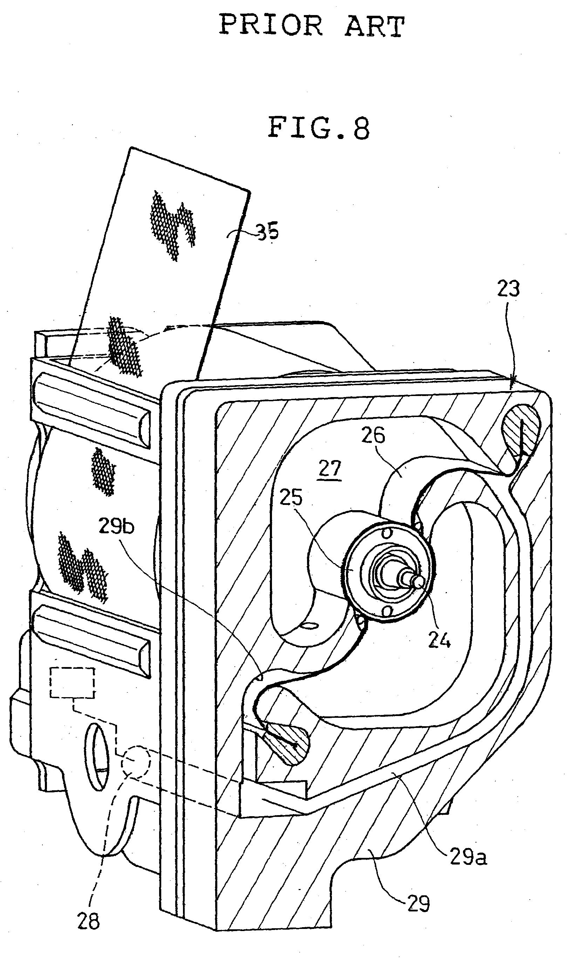

Hereinafter, embodiments of the present invention will be described with reference to the attached drawings. Fig. 1 is a perspective view of a seatbelt retractor 20' according to an embodiment, showing the same structural portion of Fig. 8 mentioned above. Fig. 2 is a perspective view showing the structure of a portion of a gas generator for a pre-tensioner of the seatbelt retractor, Fig. 3 is a sectional view taken along a line III-III of Fig. 2, Fig. 4 is a schematic structural view showing a cabin of a vehicle in which the seatbelt device is installed, and Fig. 5 is a block diagram showing a control system of the seatbelt device.

In this seatbelt retractor 20', a small-capacity gas generator A (of which the volume of gas to be generated is small) and a large-capacity gas generator B (of which the volume of gas to be generated is large) are provided as gas generators. The other structure of the seatbelt retractor 20' is the same as that of the retractor 20 shown in Figs. 7 through 9.

A seat 2 in the cabin of the vehicle 1 in which the retractor 20' is employed has a weight sensor 3 disposed in a seat cushion thereof. The detection signal of the weight sensor 3 is inputted to a control circuit 4. Also inputted into the control circuit 4 is the detection signal of a collision sensor 5. The collision sensor 5 comprises an acceleration sensor. The control circuit 4 can output operation signals to the gas generators A and B.

The gas generators A and B have different capacities, and the pre-tensioner can adjust the volume of gas to be generated to the following three stages:

When a small volume of gas is required, only the gas generator A is operated;

When a middle volume of gas is required, only the gas generator B is operated; and

When a large volume of gas is required, both of the gas generators A and B are operated.

In case a collision of the vehicle 1 is detected from a signal of the sensor 5, at least one of the gas generators A and B is actuated according to the occupant's weight detected by the weight sensor 3.

When no or very light weight is detected, neither the gas generator A nor B is operated;

When light weight is detected, only the gas generator A is operated;

When medium weight is detected, only the gas generator B is operated; and

When heavy weight is detected, both of the gas generators A and B are operated.

In this manner, controlling at least one of the gas generators A and B enables adjustment on the tensile strength by the pre-tensioner and the length of the seat belt to be wound by the pre-tensioner, corresponding to the occupant's weight. That is, when the weight is light, the tensile strength is small and the length of the seat belt to be wound is short. When the weight is medium, the tensile strength is medium and the length to be wound is also medium. When the weight is heavy, the tensile strength is large and the length to be wound is long.

For example, the guideline between the light weight and the medium weight is set to be 30 kg, the guideline between the medium weight and the heavy weight is set to be 90 kg. These guidelines are only example and it should be understood that other values may be employed.

Since the aforementioned weight sensor 3 is mounted inside the seat cushion, the weight of the occupant's lower legs is disregarded. A load sensor may be disposed on a vehicle floor so as to add the weight of the occupant's lower legs into the measured value. The weight sensor may be mounted to a rail member for attaching the seat to the vehicle body, not limited to be mounted inside the seat cushion.

Two gas generators A, B are provided in the aforementioned embodiment, but three or more of gas generators may be provided. In this case also, by setting the capacities of the gas generators to differ from each other, the volume of gas to be generated can be controlled finely into several stages.

Though the tensile strength by the pre-tensioner or the length of the belt to be wound by the pre-tensioner are adjusted by changing the number of the gas generators to be actuated in the aforementioned embodiment, this adjustment may be accomplished by time delay on the actuation of the gas generators.

In the present invention, another power source such as a spring or a solenoid may be employed.

Though the length of the belt to be wound is controlled to be longer by making the tensile strength by the pre-tensioner larger in the aforementioned embodiment, the length may be changed while keeping the tensile strength constant.

The present invention can be applied to a seatbelt device not only for the driver's seat but also for a front passenger seat and a rear seat.

Fig. 6 is a block diagram of a seatbelt and airbag system according to another embodiment. In this embodiment, the volume of gas to be generated by a gas generator (inflator) 8 of an airbag device 7 is controlled by the use of the weight data detected by the weight sensor 3. That is, when the detected weight is light, the volume of gas generated by the inflator 8 is set to be small to make the inner pressure (gas pressure) of an airbag low. When the detected weight is heavy, the inflator 8 is operated so as to make the inner pressure of the airbag higher.

Though this airbag device 7 is disposed in a steering wheel 9 for protecting a driver, inflators for an airbag device disposed in an instrument panel 10 for protecting a front passenger or an airbag device disposed in a seat back for protecting a rear passenger may be controlled according to the weight of the front or rear passenger.

In the present invention, the performance of an energy absorbing mechanism may be adjusted according to the occupant's weight.

In the present invention, the tensile strength by the pre-tensioner or the length of the belt to be wound by the pre-tensioner may be controlled to correspond to the magnitude of impact during the collision. The magnitude of the impact during the collision can be detected from the acceleration or waveform detected by the acceleration sensor 5.

According to the seatbelt device, the vehicle, and the pre-tensioner of the present invention, as mentioned above, the tensile strength by the pre-tensioner and the length of the belt to be wound by the pre-tensioner can be adjusted, thereby enabling the adjustment of the degree of restraining the occupant to the seat during a vehicle collision in accordance with, for example, the occupant's weight and/or crash-severity.

## Claims

1. A seatbelt device for protecting an occupant sitting in a vehicle seat comprising
a seat belt,
a retractor for retracting said seat belt, and
a pre-tensioner for winding a predetermined length of said seat belt in an emergency,
wherein at least one of the tensile strength by said pre-tensioner and the length of the seat belt to be wound by said pre-tensioner are adjustable.

2. A seatbelt device as claimed in claim 1, further comprising a weight detecting means for detecting weight of the occupant sitting in said vehicle seat, wherein at least one of the tensile strength and the length of the belt to be wound by said pre-tensioner are adjusted according to the weight detected by said weight detecting means.

3. A seatbelt device as claimed in claim 1 or 2, wherein the power source of said pre-tensioner is a gas generating means and wherein said gas generating means is capable of adjusting the volume of gas to be generated whereby at least one of the tensile strength and the length of the seat belt to be wound are adjustable.

4. A seatbelt device as claimed in claim 3, wherein said gas generating means comprises a plurality of gas generators so that the volume of gas to be generated is adjustable by changing the number of gas generators to be actuated or shifting the timing for actuation of the respective gas generators.

5. A seatbelt device as claimed in claim 4, wherein said gas generators have capacities different from each other whereby different volume of gas can be generated.

6. A seatbelt device as claimed in claim 3, wherein said gas generating means comprises a first gas generator having a relatively small capacity whereby small volume of gas is generated and a second gas generator having a relatively large capacity whereby large volume of gas is generated.

7. A vehicle being provided with a seatbelt device as claimed in any one of claims 1 through 6.

8. A vehicle being provided with a seatbelt device as claimed in claim 2, further provided with an airbag device of which the volume of gas to be generated is controlled according to the weight detected by said weight detecting means.

9. A vehicle being provided with a seatbelt device as claimed in claim 1, further provided with a means of detecting the magnitude of impact when the vehicle comes into collision, wherein the tensile strength and/or the length of the seat belt to be wound by said pre-tensioner are adjustable according to the magnitude of the impact detected by said means.

10. A pre-tensioner for winding a seat belt of a seatbelt device, wherein the tensile strength by said pre-tensioner and/or the length of the seat belt to be wound by said pre-tensioner are adjustable.
